Europäisches Patentamt

**European Patent Office**

**Office européen des brevets**

(11) Numéro de publication: **0 088 652**
**B1**

(12) **FASCICULE DE BREVET EUROPÉEN**

(45) Date de publication du fascicule du brevet:
15.01.86

(51) Int. Cl.⁴: **G 01 N 27/90**

(21) Numéro de dépôt: **83400307.1**

(22) Date de dépôt: **14.02.83**

(54) Appareil de contrôle par courants de Foucault à moyens d'équilibrage électroniques.

(30) Priorité: **23.02.82 BE 207389**

(43) Date de publication de la demande:
**14.09.83 Bulletin 83/37**

(45) Mention de la délivrance du brevet:
**15.01.86 Bulletin 86/3**

(84) Etats contractants désignés:
**AT CH DE GB IT LI LU NL SE**

(56) Documents cité:
**EP-A-0 015 822**
**US-A-3 229 198**

(73) Titulaire: **INTERCONTROLE Société Anonyme, 15, rue des Solets Zone Silic 433, F-94583 Rungis Cedex (FR)**

(72) Inventeur: **D'Hondt, Jean-Pierre, 5 Chaussée de Lille, B-7500 Tournai (BE)**

(74) Mandataire: **Mongrédien, André, c/o BREVATOME 25, rue de Ponthieu, F-75008 Paris (FR)**

## Description

La présente invention a pour objet un appareil de contrôle non destructif de pièce par courants de Foucault à boucle d'équilibrage électronique.

Le contrôle non destructif par courants de Foucault consiste à créer un champ magnétique variable à l'aide d'un enroulement primaire, à soumettre une pièce à contrôler à ce champ magnétique, à prélever aux bornes d'un enroulement secondaire disposé à proximité de la pièce contrôlée une tension de mesure et à analyser cette tension. Les enroulements primaires et secondaires peuvent être confondus ou former un pont. Tout défaut de la pièce (changement de dimension, variation de conductivité électrique, variation de perméabilité magnétique, criques, etc...) modifie la phase et l'intensité des courants de Foucault circulant dans la pièce et, corrélativement, change la tension de mesure.

Dans la plupart des cas, la mesure présente un caractère différentiel. Pour cela une pièce étalon, réputée bonne, est soumise à un champ magnétique identique à celui auquel est soumise la pièce à contrôler et la tension analysée est formée par la différence entre la tension correspondant à la pièce contrôlée et la tension de référence correspondant à l'étalon. Les moyens permettant de créer cette tension de référence et de former la tension différentielle constituent des moyens d'équilibrage.

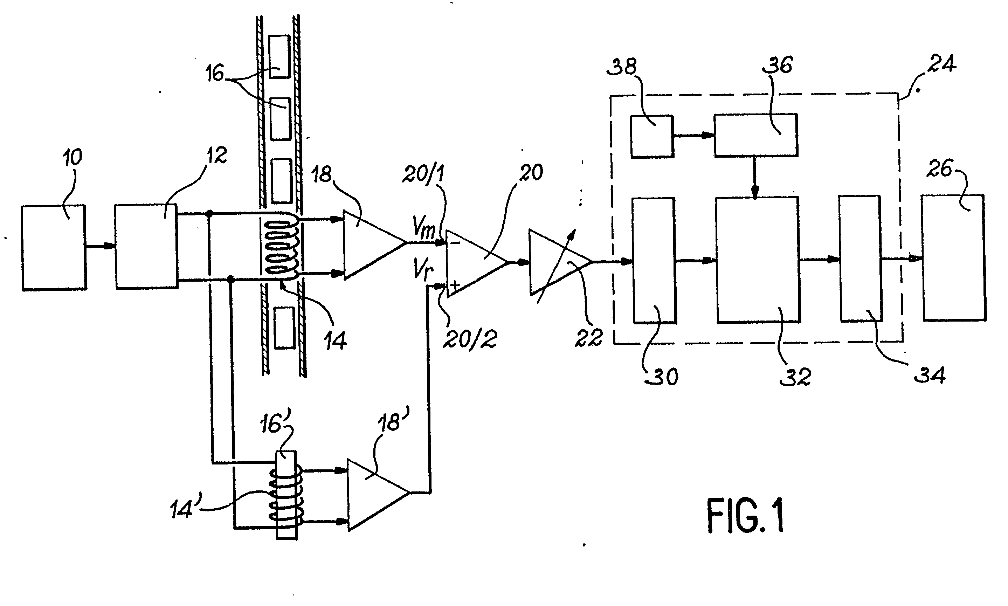

Un appareil de contrôle non destructif par courants de Foucault avec moyens d'équilibrage se présente donc comme illustré sur la figure 1. Un genérateur 10 de signal sinusoïdal est suivi d'un amplificateur 12 qui alimente une sonde 14 à proximité de laquelle défilent des pièces 18 à contrôler.

Une seconde sonde 14', identique à la première et également excitée par l'amplificateur 12, est disposée par rapport à une pièce étalon 18', comme la sonde 14 l'est par rapport aux pièces à contrôler 18. La tension prélevée aux bornes de la sonde 14 constitue la tension de mesure et celle qui est prélevée aux bornes de la sonde 14' la tension de référence.

Ces tensions sont amplifiées au moyen d'amplificateurs 18 et 18' qui délivrent des tensions Vm et Vr qui sont appliquées aux deux entrées 20/1 et 20/2 d'un amplificateur différentiel 20. Celui-ci est suivi d'un amplificateur à gain réglable 22 relié à des moyens de traitement de signal 24. Ces moyens sont aptes à déterminer les parties de la tension différentielle respectivement en phase et en quadrature de phase avec la tension d'excitation fournie par le générateur 10. Mais il peut s'agir aussi d'un circuit plus complexe permettant de déterminer les composantes de Fourier du signal. Un circuit 28 permet d'exploiter les résultats (tri, enregistrement des résultats, statistiques, etc...).

La représentation de la figure 1 laisse supposer que les sondes sont constituées par un seul enroulement. Dans la pratique, les sondes peuvent en comporter plusieurs (disposés en pont par exemple) mais la simplification faite ici n'a pas d'incidence sur la compréhension de l'invention.

Pour ce qui concerne ce genre d'appareillage, on pourra se reporter au brevet de H.L. LIBBY, US-A-3.229.198 délivré le 11 janvier 1966 et intitulé "Eddy current nondestructive testing device for measuring multiple parameter variables of a metal sample".

Dans certains appareils de ce type, les moyens de traitement 24 sont de caractère numérique. Dans ce cas, ils comprennent, comme illustré sur la figure 1, un convertisseur analogique-numérique 30 suivi d'une mémoire vive 32 de type à accès direct (en terminologie anglosaxonne "Random Access Memory") adressée par un compteur 36 relié à une horloge 38. La mémoire est suivie d'un circuit de traitement numérique 34. S'il s'agit de calculer les composantes harmoniques d'un signal, ce circuit effectue une transformation de Fourier discrète.

Le système d'équilibrage représenté sur la figure 1 présente de nombreux inconvénients:
- il réduit de moitié la puissance disponible pour
   les pièces à contrôler,
- il nécessite deux sondes,
- il requiert que l'étalon soit en permanence soumis au champ magnétique, ce qui conduit à la longue à une modification du signal de référence (échauffement du matériau, variation de ses propriétés magnétiques, etc...).

L'invention a pour but de remédier à ces inconvénients en proposant des moyens d'équilibrage de nature électronique. Ce but est atteint en formant un signal de référence une fois pour toutes, en mémorisant ce signal et en le reproduisant à chaque mesure pour le composer avec le signal de mesure.

La mémorisation du signal correspondant à la pièce étalon est particulièrement commode dans le cas des appareils numériques puisque ceux-ci possèdent déjà une mémoire, dite mémoire d'acquisition (c'est la mémoire 32 de la figure 1) dans laquelle sont stockés des échantillons du signal mesuré. Dès lors, il suffit de stocker dans cette mémoire le résultat de la mesure obtenue avec l'étalon puis de recopier le contenu de cette mémoire dans une seconde mémoire pour disposer en permanence du signal de référence. La première mémoire est ensuite libérée et rendue disponible pour les mesures correspondant aux différents échantillons à contrôler. Ainsi l'étalon n'est-il sollicité qu'une seule fois, la reproduction du signal de référence étant obtenue électroniquement. Tous les inconvénients énumérés plus haut sont donc bien évités.

En outre, l'invention présente l'avantage suivant: dans l'art antérieur il existe deux chaînes de mesure (sonde 14-amplificateur 18 d'une part et sonde 14'-amplificateur 18' d'autre part). Or de telles chaînes ne peuvent être rigoureusement identiques. Dans le signal différentiel délivré par l'amplificateur 20, il y a donc une part qui est due au déséquilibre des deux voies. Avec l'invention, le circuit ne comprend plus qu'une seule voie de mesure, utilisée deux fois: tout d'abord avec la pièce étalon, et ensuite avec les diverses pièces à contrôler. Les défauts éventuels de la voie d'analyse seront donc parfaitement compensés puisqu'ils auront les mêmes effets sur les signaux de mesure et de référence.

De façon précise, la présente invention a pour objet un appareil de contrôle non destructif de pièces par courants de Foucault comprenant de façon connue un générateur d'excitation, une sonde reliée à ce générateur, des moyens de prélèvement dans la sonde d'une tension de mesure correspondant à une pièce à contrôler, des moyens pour engendrer une tension de référence correspondent à une pièce étalon, un amplificateur différentiel ayant des première et seconde entrées et une sortie, la première entrée recevant la tension de mesure, et la seconde la tension de référence, des moyens numériques de traitement de signal ayant une entrée reliée à la sortie de l'amplificateur différentiel, à travers un amplificateur, ces moyens de traitement comprenant successivement un convertisseur analogique-numérique, une première mémoire vive à accès direct et un circuit de traitement numérique; cet appareil est caractérisé en ce que les moyens pour engendrer une tension de référence comprennent une seconde mémoire vive à accès direct ayant une entrée et une sortie, l'entrée étant reliée à la sortie de la première mémoire vive à travers un circuit interrupteur et un convertisseur numérique-analogique ayant une entrée reliée à la sortie de la mémoire et une sortie reliée à la seconde entrée de l'amplificateur différentiel.

Les caractéristiques et avantages de la présente invention apparaîtront mieux après la description qui suit, d'un exemple de réalisation donné à titre explicatif et nullement limitatif. Cette description se réfère à des dessins annexés, qui font suite à la figure 1 déjà décrite, et sur lesquels:

- la figure 2 est un schéma synoptique des moyens d'équilibrage utilisés selon l'invention,
- la figure 3 illustre un exemple de réalisation d'une mémoire d'équilibrage,
- la figure 4 illustre un exemple de réalisation du convertisseur numérique-analogique.

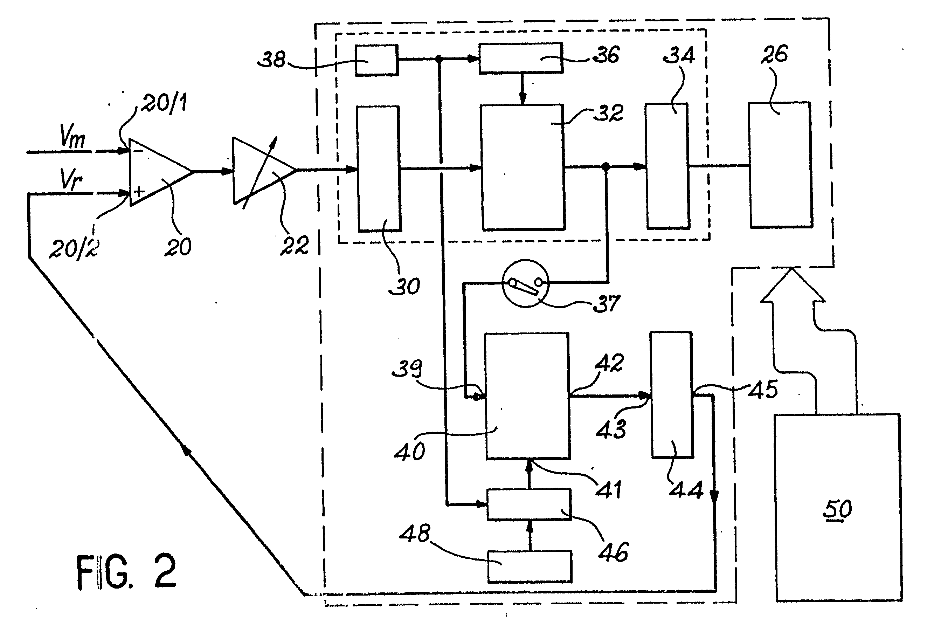

Sur le schéma de la figure 2, on retrouve des éléments déjà représentés sur la figure 1 et qui portent pour cette raison les mêmes références, à savoir: le convertisseur analogique-numérique 30, la mémoire d'acquisition 32 adressée par un compteur 38 lui-même commandé par une horloge 38 et le circuit de calcul 34. La figure 2 représente en outre des moyens d'équilibrage constitués par une seconde mémoire 40, analogue à la mémoire d'acquisition 32, cette seconde mémoire possédant une entrée de données 39 reliée à la sortie de la mémoire d'acquisition 32 par un circuit interrupteur 37, une entrée d'adressage 41 et une sortie 42; par un convertisseur numérique-analogique 44 ayant une entrée 43 reliée à la sortie 42 de la mémoire et une sortie 45 reliée à la seconde entrée 20/2 de l'amplificateur différentiel 20. Les moyens représentés comprennent encore un compteur 48 relié à l'entrée d'adressage 41 et qui reçoit les impulsions de l'horloge 38. Un circuit 48 permet le préchargement du compteur à un contenu initial.

L'ensemble du circuit représenté peut comprendre en outre un microprocesseur 50, qui commande tout ou partie des composants mentionnes, selon des processus informatiques bien connus de l'homme de l'art et qui ne font pas partie de l'invention. Ce microprocesseur n'est d'ailleurs utile que dans les appareils à très hautes performances.

Le fonctionnement de ce circuit résulte clairement de ce qui précède. Lorsque la pièce étalon est disposée dans la sonde de mesure, le signal numérique enregistré dans la mémoire 32 est en fait le signal de référence. Ce signal est formé de N échantillons numériques, ce qui requiert N emplacements de mémoire. Chaque emplacement est défini par une adresse et chaque adresse correspond à un contenu particulier du compteur 36. Dans la phase d'écriture, le contenu de ce compteur passe progressivement de 0 à N-1 sous la commande de l'horloge 38 et les N échantillons s'écrivent séquentiellement aux N adresses correspondantes.

Le contenu de la mémoire d'acquisition 32 est ensuite recopié dans la mémoire d'équilibrage 40. Cette opération est très simple du fait de la duplication des éléments de comptage et de mémorisation: le compteur 48 est, comme le compteur 38, commandé par l'horloge 38, de sorte que l'adressage d'un échantillon à lire dans la mémoire d'acquisition s'accompagne simultanément de l'adressage de cet échantillon à écrire dans la mémoire d'équilibrage 40.

Naturellement, les adresses de lecture et d'écriture peuvent être décalées, si le circuit 48 impose au compteur 46 un contenu initial différent de zéro.

Pendant toute l'opération de recopie le circuit interrupteur 37 est fermé. Puis, lorsque le signal de référence est écrit dans la mémoire 40, l'interrupteur 37 est ouvert et la mémoire 32 devient disponible pour l'écriture et la lecture des données correspondant aux pièces à contrôler.

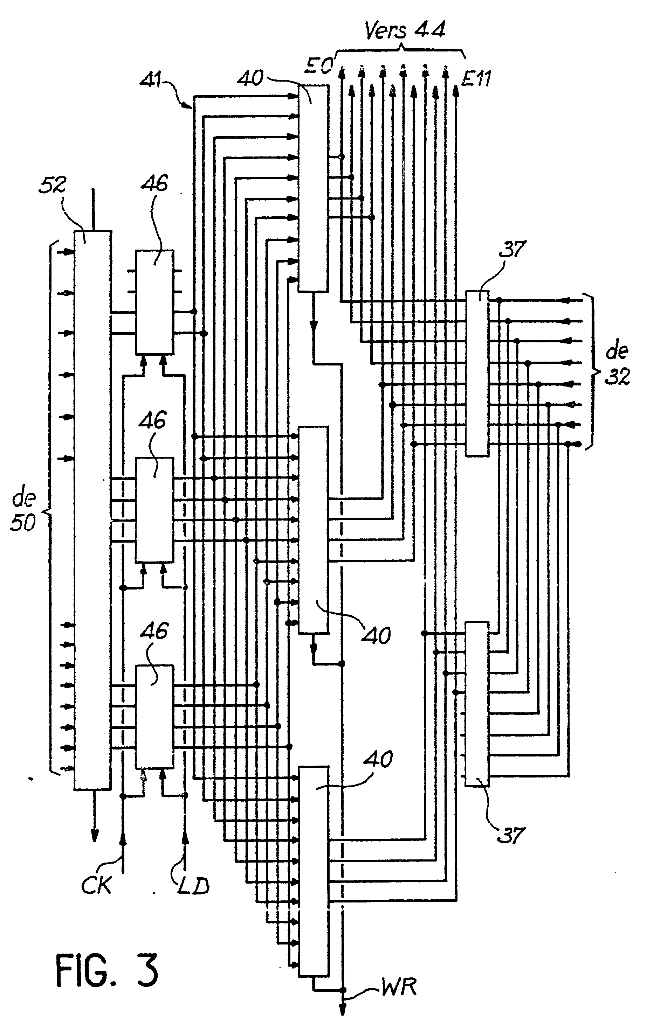

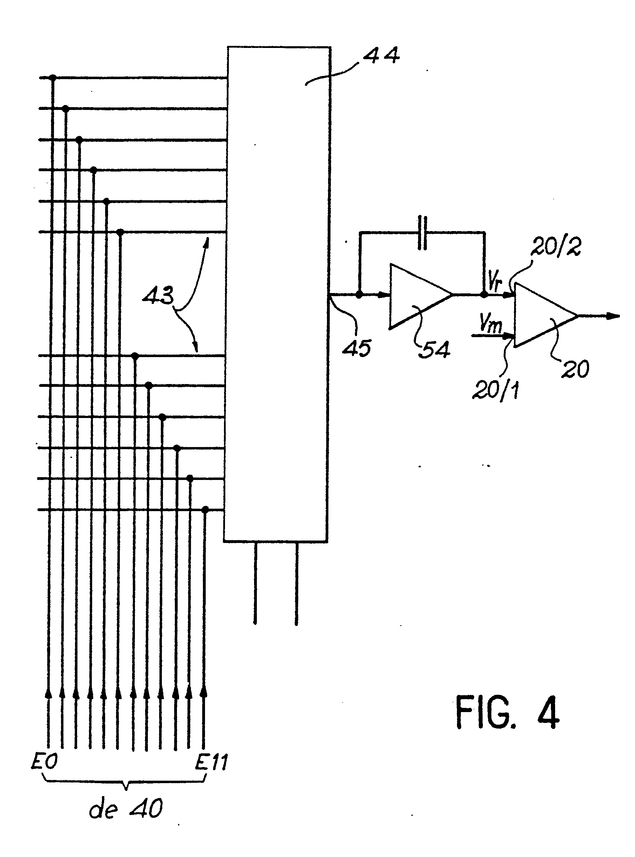

On comprendra aisément que les connexions indiquées sur la figure 2 sont schématiques et que, dans la réalité, il s'agit de bus à plusieurs connexions. De même l'interrupteur 37 qui est représenté très schématiquement est en fait un circuit électronique apte à véhiculer plusieurs éléments binaires. Le but des figures 3 et 4 est précisément de donner de ces moyens une idée plus conforme à la réalité. Ces figures correspondent à un mode particulier de réalisation qui correspond à un appareil travaillant dans la gamme de 3 à 3000 Hz avec 512 échantillons, chaque échantillon étant codé sur 12 éléments binaires ou bits.

La figure 3 tout d'abord, représente la mémoire d'équilibrage 40 formée de trois circuits mémoire, par exemple de type 2148 H, chacun de ces circuits fonctionnant sur 4 bits; l'entrée et la sortie des données s'effectuent par la droite. L'écriture et la lecture sont commandées par une connexion WR. A l'écriture les données traversent le circuit 37 composé de deux circuits tampon bidirectionnels, par exemple de type 8304; ces circuits possedent huit entrées reliées à la mémoire d'acquisition 32, et huit sorties dont quatre seulement sont utilisées pour l'un d'eux. L'adressage de la mémoire s'effectue par la gauche grâce au compteur 48 qui est formé de trois circuits de comptage, par exemple de type 74LS191; ces compteurs fonctionnent chacun sur 4 bits, ce qui permet, en ne prenant que 2 bits pour l'un des compteurs, de constituer des adresses de 10 bits; 9 bits servent à adresser l'un des 512 échantillons ($2^9 = 512$) et le $10^{\text{ème}}$ servant à remettre le compteur à zéro. Les compteurs possèdent une connexion d'horloge CK et une connexion LD de commande de chargement. Les 12 bits des données, lues dans la mémoire 40, sont véhiculés par 12 connexions E0 à E11 dirigées vers le convertisseur numérique-analogique 44.

Le compteur est précédé d'un circuit interface 52, par exemple du type 8255, qui permet au microprocesseur de venir précharger le compteur à un contenu initial.

La figure 4 montre le convertisseur numérique-analogique 44 recevant les 12 bits de la mémoire d'équilibrage 40. Ce convertisseur peut être du type AD 565. Il délivre, sur sa sortie 45, un courant qui est transformé en tension par un convertisseur courant-tension 54. C'est la tension délivrée par ce dernier circuit qui constitue la tension de référence Vr appliquée à l'entrée 20/2 de l'amplificateur différentiel 20.

**Revendications**

1. Appareil de contrôle non destructif de pièces par courants de Foucault comprenant un générateur d'excitation (10), une sonde (11) reliée à ce générateur, d'exitation (10), une sonde (14) reliée à ce générateur, des moyens de prélèvement dans la sonde d'une tension ($V_m$) de mesure correspondant à une pièce à contrôler, des moyens pour engendrer une tension ($V_r$) de référence (Vr) correspondant à une pièce étalon, un amplificateur differentiel (20) ayant des première (20/1) et seconde (20/2) entrées et une sortie, la première entrée recevant la tension de mesure, et la seconde la tension de référence, des moyens numériques (24) de traitement de signal ayant une entrée reliée à la sortie de l'amplificateur différentiel (20), à travers un amplificateur (22), ces moyens de traitement comprenant successivement un convertisseur (30) analogique-numerique, une première mémoire vive (32) à accès direct et un circuit de traitement numérique (34), caractérisé en ce que les moyens pour engendrer une tension de référence comprennent une seconde memoire vive (40) à accès direct ayant une entrée (39) et une sortie (42), l'entrée étant reliée à la sortie de la première mémoire vive (32), à travers un circuit interrupteur (37), et un convertisseur (44) numérique-analogique ayant une entrée (43) reliée à la sortie (42) de la seconde mémoire (40) et une sortie (45) reliée à la seconde (20/2) entrée de l'amplificateur différentiel (20).

2. Appareil selon la revendication 1, caractérisé en ce que chaque mémoire (32, 40) est adressée respectivement par un compteur (36, 46).

**Claims**

1. Apparatus for the non-destructive testing of articles by eddy-currents comprising an excitation generator (10), a probe (14) connected to said generator the probe having therein sampling means for a measurement potential ($V_m$) corresponding to an article being tested, generating means for a reference potential ($V_r$) corresponding to a standard article, a differential amplifier (20) having first (20/1) and second (20/2) inputs and an output, the first input receiving the measurement potential and the second receiving the reference potential digital signal-treatment means (24) having an input connected to the output of the differential amplifier (20) a cross and amplifier (22), said treatment means comprising in succession an analog - digital converter (30), a first direct-access live memory (32) and a digital treatment circuit (34), characterised in that the generating means for the reference potential comprise a second direct access live memory (40) having an input (39) and an output (42), the input being connected to the output of the first live memory (32) across an interrupter circuit (37), and a digital-analog converter (44) having an input (43) connected to the output (42) of the second memory (40) and an output (45) connected to the second input (20/2) of the differential amplifier (20).

2. Apparatus according to Claim 1, characterised in that each memory (32, 40) is respectively addressed by a counter (36, 46).

**Patentansprüche**

1. Gerät zur zerstörungsfreien Prüfung von Werkstücken mittels Foucaultströmen, enthaltend einen Erregergenerator (10), eine mit diesem Generator verbundene Sonde (14), Abgriffseinrichtungen an der Sonde für eine Meßspannung ($V_m$) entsprechend einem zu prüfenden Werkstück, Einrichtungen zum Erzeugen einer Bezugsspannung ($V_r$) entsprechend einem Eichkörper, einen Differenzverstärker (20) mit ersten (20/1) und zweiten (20/2) Eingängen und einem Ausgang, wobei der erste Eingang eine Meßspannung erhält und der zweite die Vergleichsspannung, digitale Einrichtungen (24) zur Behandlung des Signals, mit einem Eingang, der mit dem Ausgang des Differenzverstärkers (20) über einen Verstärker (22) verbunden ist, wobei die Behandlungseinrichtungen aufeinanderfolgend einen Analog/ Digital-Wandler (30), einen ersten Lebendspeicher (32) mit direktem Zugriff und einen digitalen Verarbeitungskreis (34) enthalten, dadurch <u>gekennzeichnet</u>, daß die Einrichtungen zum Erzeugen einer Bezugsspannung enthalten: einen zweiten Lebendspeicher (40) mit direktem Zugriff, der einen Eingang (39) und einen Ausgang (42) aufweist, wobei der Eingang mit dem Ausgang des ersten Lebendspeichers (32) über einen Unterbrecherkreis (37) verbunden ist, und einen Digital/Analog-Wandler (44) mit einem Eingang (43), der mit dem Ausgang (42) des zweiten Speichers (40) verbunden ist, und einem Ausgang (45), der mit dem zweiten (20/2) Eingang des Differenzverstärkers (20) verbunden ist.

2. Gerät nach Anspruch 1, dadurch <u>gekennzeichnet</u>, daß jeder Speicher (32, 40) jeweils durch einen Zähler (36, 46) adressiert wird.

FIG.1

FIG. 2

FIG. 3

FIG. 4